# EUROPÄISCHE PATENTSCHRIFT

(11) **EP 3 559 854 B1**
(45) Veröffentlichungstag und Bekanntmachung des Hinweises auf die Patenterteilung: **21.07.2021**
(21) Anmeldenummer: 17823142.9
(22) Anmeldetag: 21.12.2017
(51) Int. Cl.: G05B 19/042, H04L 12/40, H04L 29/08, G06F 21/86

(54) **SICHERHEITSGERÄT UND FELDBUSSYSTEM ZUR UNTERSTÜTZUNG EINER SICHEREN KOMMUNIKATION ÜBER EINEN FELDBUS**
SECURITY DEVICE AND FIELD BUS SYSTEM FOR SUPPORTING SECURE COMMUNICATION BY MEANS OF A FIELD BUS
APPAREIL DE SÉCURITÉ ET SYSTÈME DE BUS DE TERRAIN POUR LA PRISE EN CHARGE D'UNE COMMUNICATION SÉCURISÉE SUR UN BUS DE TERRAIN

(30) Priorität: 22.12.2016 DE 102016125511
(43) Veröffentlichungstag der Anmeldung: 30.10.2019
(73) Patentinhaber: Phoenix Contact GmbH & Co. KG, 32825 Blomberg (DE); ABB Schweiz AG, 5400 Baden (CH)
(72) Erfinder: VENEMA, Guido, 32756 Detmold (DE); LESSING, Patrick, 10555 Berlin (DE); HOTZ, Michael, 22395 Hamburg (DE); BOLLMEYER, Stefan, 32425 Minden (DE); SCHIERHOLZ, Ragnar, 32427 MInden (DE); WANSNER, Bernd, 32427 Minden (DE); HINRICHS, Marten, 32457 Porta Westfalica (DE)
(74) Vertreter: Blumbach · Zinngrebe Patentanwälte PartG mbB
(86) Internationale Anmeldenummer: PCT/EP2017/084257
(87) Internationale Veröffentlichungsnummer: WO 2018/115378

(56) Entgegenhaltungen:
- DE-A1- 10 248 100
- DE-A1-102011 007 571

## Beschreibung

Die Erfindung betrifft ein Sicherheitsgerät und ein Feldbussystem zur Unterstützung einer sicheren Kommunikation über einen Feldbus.

Die Kommunikationssicherheit in der Informations- und Kommunikationstechnik spielt mittlerweile im gesamten Cyber-Raum und somit auch in der industriellen Automatisierungstechnik eine immer wichtigere Rolle.

Aus der EP 2 940 541 A2 ist eine Maßnahme bekannt, mit der einem herkömmlichen Gerät innerhalb eines Mikronetzwerks (Microgrid) eine sichere Kommunikation angeboten werden kann. Hierzu wird zwischen einem herkömmlichen lokalen Gerät und einer Fernverbindung ein Sicherheitsgerät geschaltet, welches als BITW (Bump-in-the-wire)-Gerät ausgebildet ist. Solche BITW-Geräte werden als separate und eigenständige Einheiten angeschaltet und verwaltet.

Existierende Feldbusnetzwerkprotokolle wie zum Beispiel Modbus, PROFINET, Ethernet/IP, HART oder Foundation Fieldbus Protokolle enthalten keine Sicherheitsmechanismen bzw. -funktionen, d.h. Security-Mechanismen, mit denen Kommunikationsverbindungen zwischen zwei oder mehr Teilnehmern zum Beispiel gegen externe Angriffe geschützt werden können. Bekannte Sicherheitsfunktionen, die die Kommunikationssicherheit und insbesondere den Schutz des Informationsaustauschs zwischen Teilnehmern gewährleisten, sind zum Beispiel Authentifizierungsalgorithmen, Algorithmen zur Integritätssicherung oder Ver- und Entschlüsselungsalgorithmen. Bisher werden die bekannten Feldbusnetzwerke mit Hilfe von in der Peripherie angeordneten Firewalls oder Application Gateways geschützt, so dass vertrauensvolle Zonen entstehen, innerhalb derer die Kommunikation aber unsicher ist.

Aus der DE 102 48 100A1 ist eine sicherheitsgerichtete Vorrichtung zum Anschluss von Feldgeräten an einen sicherheitsgerichteten Feldbus bekannt. Hierzu wird ein Feldbusstecker verwendet, der eine sicherheitsgerichtete Feldbusschnittstelle aufweist, die eine Übertragung sicherheitsgerichteter Signale über den Feldbus zu einem Steuersystem ermöglicht. Die sicherheitsgerichteten Signale entsprechen den geforderten Sicherheitskategorien und somit Safety-Aspekten. Darüber hinaus weist der Feldbusstecker eine sicherheitsgerichtete, feldbusneutrale Geräteschnittstelle auf, an die ein Safety-Feldgerät mit einer sicherheitsgerichteten, feldbusneutralen Feldbusschnittstelle angeschlossen werden kann. Dank des besonderen Feldbussteckers, der sowohl eine sicherheitsgerichtete, feldbusneutrale Feldbusstelle als auch eine sicherheitsgerichtete, allerdings feldbusabhängige Feldbusschnittstelle aufweist, müssen Feldgeräte nur noch für eine sicherheitsgerichtete, feldbusneutrale Feldbusschnittstelle entwickelt werden.

Aus der DE 10 2011 007 571 A1 ist ein Feldgerät bekannt, in dem u.a. ein Steuerrechner, ein elektronischer Speicher und ein Konfigurationsspeicher implementiert sind, die mittels einer Vergussmasse vollständig überdeckt sind, um die Zugänglichkeit zu den Komponenten zu erschweren und einen gewissen Tamperschutz zu erreichen.

Der Erfindung liegt die Aufgabe zugrunde, ein Sicherheitsgerät und ein Feldbussystem zu schaffen, mit denen es möglich ist, Feldbusteilnehmern, die über keine Sicherheitsfunktion verfügen, die Möglichkeit zu geben, sicher über einen Feldbus zu kommunizieren.

Das oben genannte technische Problem wird durch die Merkmale des Anspruchs 1 gelöst.

Demnach wird ein Sicherheitsgerät zur Unterstützung einer sicheren Kommunikation über einen Feldbus bereitgestellt. Das Sicherheitsgerät weist eine Anschlusseinrichtung zum direkten Koppeln des Sicherheitsgeräts mit einer zum Anbinden an einen Feldbus ausgebildeten Netzwerkschnittstelle eines Feldbusteilnehmers auf, der nicht zur sicheren Kommunikation über den Feldbus ausgebildet ist. Das bedeutet, dass der Feldbusteilnehmer über keine Sicherheitsfunktionalität zur Sicherung einer Kommunikation verfügt. Mit anderen Worten: Der Feldbusteilnehmer, der über keine Sicherheitsfunktionalität zur Sicherung einer Kommunikation verfügt, ist technisch nicht dazu in der Lage, einen Informationsaustausch zwischen sich und wenigstens einem weiteren Feldbusteilnehmer zu schützen.

Das Sicherheitsgerät ist derart ausgebildet, dass im gekoppelten Zustand zwischen dem Sicherheitsgerät und dem Feldbusteilnehmer, der nicht zur sicheren Kommunikation über den Feldbus ausgebildet ist, eine Verbindung derart besteht, dass nach einer Trennung oder Beschädigung der Kopplung der ordnungsgemäße Betrieb des Sicherheitsgeräts reversibel oder irreversible blockiert ist. Das Sicherheitsgerät weist ferner eine Netzwerkschnittstelle zum Anbinden des Sicherheitsgeräts an den Feldbus auf. Ferner weist das Sicherheitsgerät eine Sende- und Empfangseinrichtung auf, die dazu ausgebildet ist, von einem direkt angekoppelten Feldbusteilnehmer, der nicht zu einer sicheren Kommunikation ausgebildet ist, kommende Daten gemäß einem vorbestimmten Sicherheitsprotokoll sicher über den Feldbus zu übertragen. Ferner ist die Sende- und Empfangseinrichtung dazu ausgebildet, über den Feldbus gemäß dem vorbestimmten Sicherheitsprotokoll für den Feldbusteilnehmer bestimmte Daten zu empfangen und dem Feldbusteilnehmer als nicht sichere zu übergeben.

Unter einem vorbestimmten Sicherheitsprotokoll ist ein Protokoll zu verstehen, welches eine Kommunikationsverbindung bzw. einen Informationsaustausch zwischen zwei oder mehr Teilnehmern schützt. Beispielsweise regelt das vorbestimmte Sicherheitsprotokoll eine Authentifizierung, einen Integritätsschutz, eine Datenverschlüsselung oder Datenentschlüsselung. Somit ist das Sicherheitsgerät vorzugsweise zur Durchführung eines Authentifizierungsverfahrens und/oder zur Durchfuhrung wenigstens eines kryptografischen Algorithmus gemäß dem vorbestimmten Sicherheitsprotokoll ausgebildet, um eine sichere, zum Beispiel gegen externe Angriffe geschützte Kommunikation sicherzustellen.

In Abhängigkeit von dem vorbestimmten Sicherheitsprotokoll kann die Sende- und Empfangseinrichtung auch zum Entschlüsseln von über den Feldbus empfangenen verschlüsselten Daten und zum Verschlüsseln von Daten, die von einem angeschlossenen Feldbusteilnehmer, der nicht zur sicheren Kommunikation über den Feldbus ausgebildet ist übertragen werden sollen, ausgebildet sein.

Um kryptografische Algorithmen ausführen zu können, kann das Sicherheitsgerät eine sichere Speichereinrichtung zum Ablegen kryptografischer Schlüssel aufweisen. In der sicheren Speichereinrichtung können auch Programme zur Ausführung von Sicherheitsfunktionen gemäß dem vorbestimmten Sicherheitsprotokoll abgelegt sein.

Bereits an dieser Stelle sei erwähnt, dass das Sicherheitsgerät an sich ändernde Sicherheitsprotokolle zur Kommunikationssicherheit angepasst werden kann. Hierzu kann das Sicherheitsgerät eine Programmierschnittstelle aufweisen, über die eine entsprechenden Programmierung des Sicherheitsgeräts möglich ist. Denkbar ist allerdings auch, dass das Sicherheitsgerät über den Feldbus aktualisiert werden kann.

Vorteilhafter Weise weist das Sicherheitsgerät eine Steuereinrichtung und eine Überwachungseinrichtung auf, die zum Überwachen der Verbindung zwischen dem Sicherheitsgerät und einem angeschlossenen Feldbusteilnehmer ausgebildet ist. Die Steuereinrichtung ist dazu ausgebildet, unter Ansprechen auf ein Fehlersignal der Überwachungseinrichtung den ordnungsgemäßen Betrieb des Sicherheitsgeräts zu blockieren. Ein solches Fehlersignal kann vom Sicherheitsgerät ausgelöst werden, wenn das Sicherheitsgerät ordnungsgemäß, d.h. ohne Beschädigung, oder gewaltsam vom angekoppelten Feldbusteilnehmer getrennt wird.

Vorteilhafter Weise kann die Steuereinrichtung dazu ausgebildet sein, unter Ansprechen auf ein Fehlersignal der Überwachungseinrichtung wenigstens einen der in der sicheren Speichereinrichtung gespeicherten kryptografischen Schlüssel zu löschen und/oder die Anschlusseinrichtung und/oder die Netzwerkschnittstelle des Sicherheitsgeräts irreversibel oder reversibel zu blockieren.

Dank dieser Maßnahme wird sichergestellt, dass das Sicherheitsgerät bei Feststellung einer Trennung oder Beschädigung der Kopplung mit dem Feldbusteiinehmer, wenn überhaupt, nur dann weiter betrieben werden kann, wenn eine Bedienperson das Sicherheitsgerät wieder freigibt, indem beispielsweise die zuvor gelöschten kryptografischen Schlüssel wieder neu eingespeichert und/oder die gesperrte Netzwerkschnittstelle und/oder Anschlusseinrichtung entsperrt werden.

Zweckmäßigerweise erfolgt die Energieversorgung des Sicherheitsgeräts über den Feldbus beispielsweise mittels der bekannten Power-Over-Ethernet-Technologie, und/oder mittels einer internen Energieversorgungsquelle und/oder über einen angeschlossenen Feldbusteilnehmer und/oder mittels der Energy Harvesting Technologien.

Für den Fall, dass einem Feldbusteilnehmer, der nicht zur sicheren Kommunikation über den Feldbus ausgebildet ist und der bereits mit dem Sicherheitsgerät gekoppelt ist, eine nicht sichere Kommunikation über den Feldbus ermöglicht werden soll, kann die Sende- und Empfangseinrichtung dazu ausgebildet sein, Daten von dem angeschlossenen Feldbusteilnehmer transparent zum Feldbus durchzuleiten.

Vorzugsweise ist als Feldbusteilnehmer ein Feldgerät oder ein Steuerungsgerät mit dem Sicherheitsgerät verbindbar.

Das vorbestimmte Sicherheitsprotokoll enthält mehrere definierte Sicherheitsfunktionen, wie zum Beispiel Authentifizierungsfunktionen, Verschlüsselungsfunktionen und Integritätssicherungsfunktionen, die als separater Protokollstapel implementiert oder in einem Feldbusprotokoll integriert sein können.

Das oben genannte technische Problem wird ebenfalls durch die Merkmale des Anspruchs 11 gelöst.

Demnach ist ein Feldbussystem zur Unterstützung einer sicheren Kommunikation über einen Feldbus vorgesehen. Das Feldbussystem umfasst einen Feldbus, wenigstens einen ersten Feldbusteilnehmer, der eine Netzwerkschnittstelle, die zum Anschalten an den Feldbus ausgebildet ist, aufweist, wobei der wenigstens eine erste Feldbusteilnehmer nicht zu einer sicheren Kommunikation über den Feldbus ausgebildet ist. Der wenigstens eine erste Feldbusteilnehmer ist mit einem Sicherheitsgerät, welches vorstehend definiert worden ist, verbunden, wobei das Sicherheitsgerät für eine sichere Kommunikation gemäß einem vorbestimmten Sicherheitsprotokoll ausgebildet ist.

Vorteilhafterweise wird der wenigstens eine Feldbusteilnehmer und das mit ihm gekoppelte Sicherheitsgerät im Feldbussystem als ein einziger Feldbusteilnehmer verwaltet, indem beispielsweise dem wenigstens eine Feldbusteilnehmer und dem mit ihm gekoppelten Sicherheitsgerät eine gemeinsame Adresse zugeordnet ist.

Vorteilhafterweise ist an den Feldbus ein zweiter Feldbusteilnehmer angeschlossen, der für eine sichere Kommunikation mit dem Sicherheitsgerät des wenigstens einen ersten Feldbusteilnehmers gemäß dem vorbestimmten Sicherheitsprotokoll ausgebildet ist.

Um eine stabile und zuverlässige Kopplung zwischen dem wenigstens einen ersten Feldbusteilnehmer und dem wenigstens einen Sicherheitsgerät herzustellen, wird das Sicherheitsgerät lösbar oder nicht lösbar mit dem wenigstens einen ersten Feldbusteilnehmer verbunden. Unter einer lösbaren Verbindung wird beispielsweise eine Schraubverbindung verstanden, während eine nicht lösbare Verbindung zum Beispiel eine Niet-, Schweiß- oder Klebeverbindung sein kann.

Gemäß einer vorteilhaften Ausgestaltung kann der wenigstens eine erste Feldbusteilnehmer als Feldgerät oder Steuerungsgerät und der wenigstens eine zweite Feldbusteilnehmer als Feldgerät oder Steuerungsgerät ausgebildet sein. Ein Feldgerät kann beispielsweise ein Sensor oder Aktor sein, während ein Steuerungsgerät beispielsweise eine SPS (Speicherprogrammierbare Steuerung) oder ein DCS (Distributed Control System)-System sein kann.

Das oben genannte Problem wird ebenfalls durch die Merkmale des Anspruchs 15 gelöst. Demgemäß ist das Sicherheitsgerät in einem Steckverbinder, insbesondere in einem RJ45-Stecker integriert.
Die Erfindung wird nachfolgend anhand einiger Ausführungsbeispiele in Verbindung mit den beiliegenden Zeichnungen näher erläutert. Es zeigen:
Figur 1 ein beispielhaftes Sicherheitsgerät zur Unterstützung einer sicheren Kommunikation über einen Feldbus, welches in einem RJ45-Stecker integriert ist,
Figur 2 ein weiteres beispielhaftes Sicherheitsgerät, und
Figur 3 ein beispielhaftes Feldbussystem, in welchem die Erfindung verwirklicht ist.

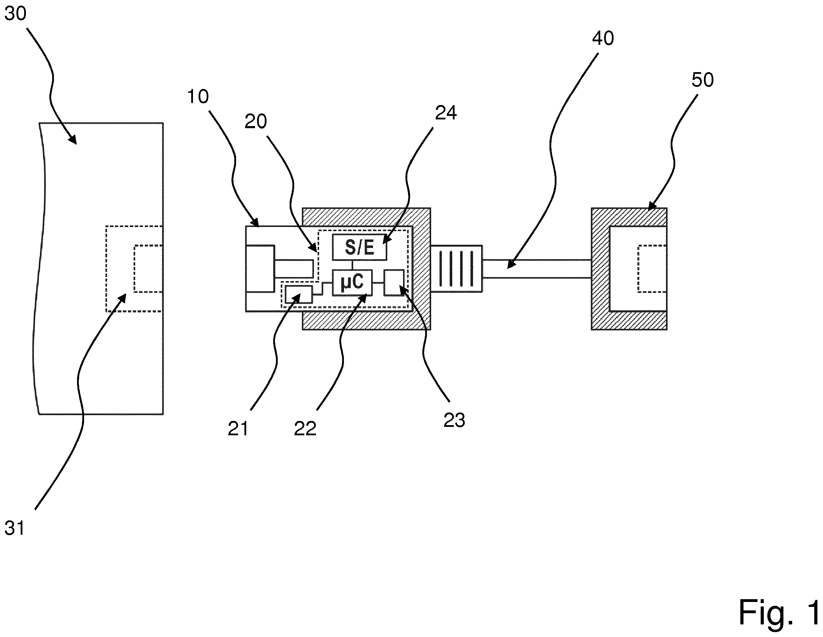

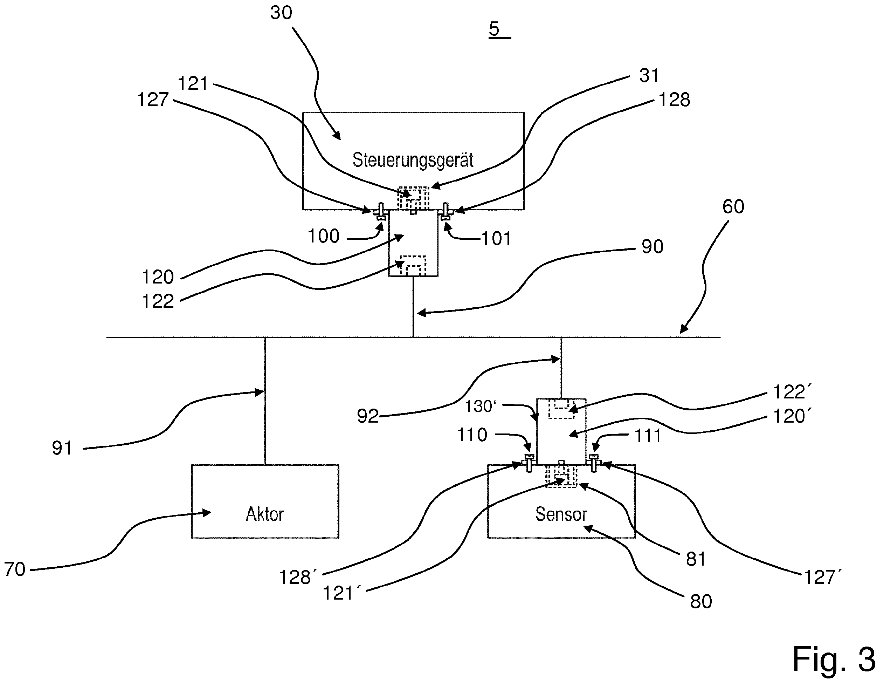

Figur 1 zeigt ein beispielhaftes Sicherheitsgerät 20 zur Unterstützung einer sicheren Kommunikation über einen Feldbus 60, der beispielhaft in Fig. 3 gezeigt ist. Mit anderen Worten: Das Sicherheitsgerät 20 dient der Sicherung einer Kommunikation über den Feldbus 60, beispielsweise dem Schutz eines Informationsaustauschs gegen extern Angriffe. Wie Fig. 1 beispielhaft zeigt, kann das Sicherheitsgerät 20 in einem Steckverbinder, insbesondere in einem RJ45-Stecker 20 integriert sein.

Das Sicherheitsgerät 20 weist eine Anschlusseinrichtung 10 zum direkten Koppeln des Sicherheitsgerätes 20 mit einer zum Anbinden an den Feldbus 60 ausgebildeten Netzwerkschnittstelle 31 eines Feldbusteilnehmers 30 auf, der nicht zur sicheren Kommunikation über den Feldbus 60 ausgebildet ist. Mit anderen Worten: Der Feldbusteilnehmer 30 verfügt über keinerlei Sicherheitsftinktionalitäten zur Sicherung einer Kommunikation. Bei der Netzwerkschnittstelle des Feldbusteilnehmers 30 handelt es sich vorzugsweise um eine RJ45-Buchse, in die der das Sicherheitsgerät 20 beherbergende RJ45-Stecker eingeführt werden kann. Der RJ45-Stecker 10 und die RJ45-Buchse können lösbar oder nicht lösbar mechanisch miteinander gekoppelt werden.

Im gekoppelten Zustand, der beispielsweise in Figur 3 gezeigt ist, besteht zwischen dem Sicherheitsgerät 20 und dem Feldbusteilnehmer 30 eine Verbindung bzw. Kopplung derart, dass bei einer Trennung oder Beschädigung der Kopplung der ordnungsgemäße Betrieb des Sicherheitsgeräts 20 reversibel oder irreversibel blockiert ist.

Denkbar ist, dass das Sicherheitsgerät 20 mit dem Feldbusteilnehmer 30 vernietet wird, so dass durch einen Versuch, das Sicherheitsgerät 20 vom Feldbusteilnehmer 30 zu entfernen, das Sicherheitsgerät 20 derart beschädigt wird, dass ein ordnungsgemäßer Betrieb irreversibel blockiert ist. Vorteilhafterweise wird bei einem Entfernen des Sicherheitsgeräts 20 der Feldbusteilnehmer 30 nicht beschädigt, beziehungsweise nicht in der Weise beschädigt, dass er nicht mehr funktionsfähig ist.

Das Sicherheitsgerät 20 weist eine Netzwerkschnittstelle 50 zum Anbinden an den Feldbus 60 auf. Vorzugsweise handelt es sich bei der Netzwerkschnittstelle 50 um eine RJ45-Buchse, die über ein Kabel 40 mit dem Sicherheitsgerät 20 verbunden sein kann. Weiterhin ist im Sicherheitsgerät 20 eine Sende- und Empfangseinrichtung 24 implementiert, die dazu ausgebildet ist, von einem direkt angekoppelten Feldbusteilnehmer, beispielsweise dem Feldbusteilnehmer 30, der nicht zur sicheren Kommunikation ausgebildet ist, kommende Daten gemäß einem vorbestimmten Sicherheitsprotokoll sicher über den Feldbus 60 zu übertragen. Die Sende- und Empfangseinrichtung 24 ist ferner dazu ausgebildet, gemäß dem vorbestimmten Sicherheitsprotokoll über den Feldbus 60 übertragene und für den Feldbusteilnehmer 30 bestimmte Daten zu empfangen, zu entsichern anschließend und dem Feldbusteilnehmer 30 zu übergeben. Auf diese Weise kann der Informationsaustausch über den Feldbus 60 zum Beispiel gegen externe Angriffe geschützt werden.

Das Sicherheitsgerät 20 kann eine Steuereinrichtung 22, die als Mikrokontroller ausgebildet sein kann, aufweisen. Ferner kann eine Überwachungseinrichtung 21 vorgehen sein, die zum Überwachen der elektrischen und/oder mechanischen Verbindung zwischen dem Sicherheitsgerät 20 und einem angeschlossenen Feldbusteilnehmer, beispielsweise dem Feldbusteilnehmer 30, ausgebildet ist, wobei die Steuereinrichtung 22 dazu ausgebildet ist, unter Ansprechen auf ein Fehlersignal der Überwachungseinrichtung 21 den ordnungsgemäßen Betrieb des Sicherheitsgeräts 20 zu blockieren. Ein solches Fehlersignal kann vom Sicherheitsgerät 20 ausgelöst werden, wenn das Sicherheitsgerät 20 ordnungsgemäß, d.h. ohne Beschädigung, oder gewaltsam vom angekoppelten Feldbusteilnehmer 30 getrennt wird.

Die Überwachungseinrichtung 21 kann beispielsweise als Drucksensor ausgebildet sein, der erkennt, wenn das Sicherheitsgerät 20 mit dem Feldbusteilnehmer 30 gekoppelt ist. Denkbar ist ferner, dass die Überwachungseinrichtung 21 dazu ausgebildet ist, einen Stromfluss zu detektieren, wenn das Sicherheitsgerät 20 mit dem Feldbusteilnehmer 30 verbunden ist.

In Abhängigkeit des vorbestimmten Sicherheitsprotokolls kann die Sende- und Empfangseinrichtung 24 zum Entschlüsseln von über den Feldbus 60 empfangenen verschlüsselten Daten und zum Verschlüsseln von Daten, die von einem angeschlossenen Feldbusteilnehmer, beispielsweise dem Feldbusteilnehmer 30, der nicht zur sicheren Kommunikation über den Feldbus ausgebildet ist, übertragen werden sollen, ausgebildet sein. Zusätzlich oder optional kann das Sicherheitsgerät 20 zur Durchführung eines Authentifizierungsverfahrens und/oder wenigstens eines kryptografischen Algorithmus gemäß dem vorbestimmten Sicherheitsprotokoll ausgebildet sein.

Um Daten verschlüsseln und einen kryptografischen Algorithmus ausführen zu können, weist das Sicherheitsgerät 20 eine sichere Speichereinrichtung 23 auf, in der kryptografische Schlüssel abgelegt werden können. In der sicheren Speichereinrichtung 23 oder einer separaten Speichereinrichtung können femer Programme gespeichert werden, die zur Durchführung von Sicherheitsfunktionen gemäß dem vorbestimmten Sicherheitsprotokoll von Steuereinrichtung 22 ausgeführt werden können. Als sichere Speichereinrichtung kann ein Hardware Security Module (HSM) eingesetzt werden.

Das vorbestimmte Sicherheitsprotokoll enthält mehrere von dem Sicherheitsgerät 20 ausführbare Sicherheitsfunktionen, die bekannt sind oder erst noch entwickelt werden. Insbesondere ist das vorbestimmte Sicherheitsprotokoll in der Lage, Sicherheitsfunktionen zur Kommunikationssicherung unabhängig von einer Protokollschicht beispielsweise des 7-Schichten-OSI-Modells zu unterstützen. Eine beispielhafte Sicherheitsfunktion kann die Durchführung eines MAC (Message Authentification Code) Algorithmus auf der Schicht 2 unterstützen. Eine weitere Sicherheitsfunktion kann eine Transportschichtsicherheit (TLS: Transport Layer Security) für TCP-basierte Protokolle unterstützen. Eine weitere Sicherheitsfunktion kann eine Endpunkt-Authentifizierung und ein Sitzungsschlüsselmanagement auf einer Anwendungsschicht des OSI-Schichtenmodells unterstützen.

Das mehrere Sicherheitsfunktionen umfassende Sicherheitsprotokoll kann als ein separater Protokollstapel ausgebildet oder in einem Feldbusprotokoll integriert sein, welches in den Sicherheitsgeräten gespeichert sein kann.

Die Steuereinrichtung 22 kann dazu ausgebildet sein, unter Ansprechen auf ein Fehlersignal der Überwachungseinrichtung 21 wenigstens einen der in der sicheren Speichereinrichtung 23 gespeicherten kryptografischen Schlüssel zu löschen. Auf diese Weise kann die Funktionsfähigkeit des Sicherheitsgerätes 20 reversibel blockiert werden. Denn für den Fall, dass das Sicherheitsgerät 20 weiterhin verwendet werden soll, kann der gelöschte kryptografische Schlüssel erneut in den Speicher 23 eingeschrieben werden bzw. eine neu definierter Schlüssel eingeschrieben werden. Hierzu kann das Sicherheitsgerät 20 eine Programmierschnittstelle zur externen Programmierung aufweisen. Über die Programmierschnittstelle kann das Sicherheitsgerät 20 auch an sich ändernde Sicherheitsprotokolle angepasst werden. Um die Funktionsfähigkeit beziehungsweise einen ordnungsgemäßen Betrieb des Sicherheitsgerätes 20 irreversibel blockieren zu können, kann vorgesehen sein, dass die Steuereinrichtung 22 dazu ausgebildet ist, unter Ansprechen auf ein Fehlersignal der Überwachungseinrichtung 21 die Anschlusseinrichtung 10 und/oder die Netzwerkschnittstelle 50 irreversibel oder reversibel zu sperren.

Die Energieversorgung des Sicherheitsgerätes 20 kann über den Feldbus 60, und/oder mittels einer internen Energieversorgungsquelle (nicht dargestellt), und/oder über einen angeschlossenen Feldbusteilnehmer, beispielsweise den Feldbusteilnehmer 30, und/oder mittels der Energy Harvesting Technologien erfolgen. Eine Energieversorgung des Sicherheitsgerätes 20 über den Feldbus 60 kann beispielsweise mit der bekannten Power-Over-Ethernet-Technologie erreicht werden. Als interne Energieversorgungsquelle kann eine Batterie verwendet werden.

Bei dem in Figur 1 gezeigten Feldbusteilnehmer 30 kann es sich beispielsweise um ein Steuerungsgerät handelt. Als Feldbusteilnehmer kann allerdings auch ein Feldgerät, wie zum Beispiel ein Sensor oder Aktor mit dem Sicherheitsgerät 20 verbunden werden.

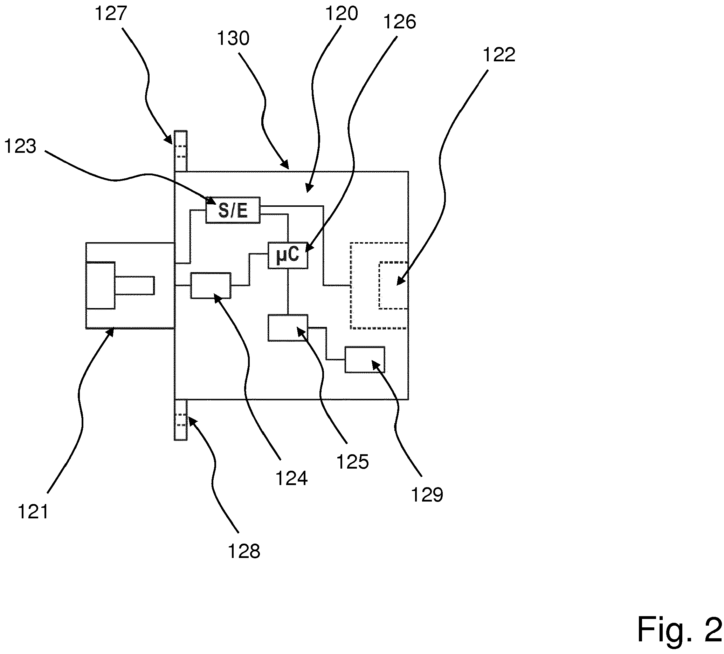

Figur 2 zeigt ein alternatives Sicherheitsgerät 120, welches in einem Gehäuse 130 untergebracht ist. Bereits an dieser Stelle sei erwähnt, dass die Funktionsweise und der Aufbau des Sicherheitsgeräts 120 im Wesentlichen der Funktionsweise und dem Aufbau des Sicherheitsgeräts 20 entsprechen kann, so dass, um Wiederholungen zu vermeiden, auf die Erläuterungen hinsichtlich des Sicherheitsgeräts 20 verwiesen wird.

An dem Gehäuse 130 können zwei Flansche 127 und 128 angeordnet sein, in denen jeweils eine Öffnung vorgesehen ist, durch die beispielsweise jeweils eine Schraube oder ein Niet zum Koppeln des Sicherheitsgeräts 120 an einen Feldbusteilnehmer hindurchgeführt werden können. Das Sicherheitsgerät 120 weist eine Anschlusseinrichtung 121 zum direkten Koppeln des Sicherheitsgerätes 120 mit einer zum Anbinden an einen Feldbus ausgebildeten Netzwerkschnittstelle eines Feldbusteilnehmers, beispielsweise des Feldbusteilnehmers 30, der nicht zur sicheren Kommunikation über den Feldbus ausgebildet ist, auf. Die Anschlusseinrichtung 121 kann als RJ45-Stecker ausgebildet sein, der aus dem Gehäuse 130 des Sicherheitsgeräts 120 herausgeführt ist. Ferner weist das Sicherheitsgerät 120 eine Netzwerkschnittstelle 122 zum Anbinden des Sicherheitsgeräts 120 an den Feldbus 60 auf. Die Netzwerkschnittstelle 122 kann als RJ45-Buchse ausgebildet sein, in die ein RF-45-Stecker eines Netzwerkkabels eingeführt werden kann, um das Sicherheitsgerät 120 mit dem Feldbus 60 zu verbinden.

Wiederum besteht, wie in Figur 3 ersichtlich, im gekoppelten Zustand eine elektrische und mechanische Verbindung zwischen dem Sicherheitsgerät 120 und dem Feldbusteilnehmer 30 derart, dass bei einer Trennung oder Beschädigung der Kopplung der ordnungsgemäße Betrieb des Sicherheitsgerätes 120 reversibel oder irreversibel blockiert ist. Das Sicherheitsgerät 120 weist ferner eine Netzwerkschnittstelle 122 zum Anbinden des Sicherheitsgeräts 120 an den Feldbus 60 auf, wie dies ebenfalls in Figur 3 ersichtlich ist. Weiterhin weist das Sicherheitsgerät 120 eine Sende-Empfangseinrichtung 123 auf, die dazu ausgebildet ist, von einem direkt angekoppelten Feldbusteilnehmer, beispielsweise dem Feldbusteilnehmer 30, der nicht zu einer sicheren Kommunikation ausgebildet ist, kommende Daten gemäß einem vorbestimmten Sicherheitsprotokoll sicher über den Feldbus 60 zu übertragen. Ferner ist die Sende- und Empfangseinrichtung 123 dazu ausgebildet, gemäß dem vorbestimmten Sicherheitsprotokoll über den Feldbus 60 übertragene und für den Feldbusteilnehmer 30 bestimmte Daten zu empfangen und dem Feldbusteilnehmer 30 zu übergeben.

Ähnlich dem Sicherheitsgerät 20 kann das Sicherheitsgerät 120 eine Überwachungseinrichtung 124, einen sicheren Speicher 125 und eine Steuereinrichtung 126 aufweisen, die beispielsweise als Mikrokontroller ausgebildet ist. Um das Sicherheitsgerät 120 programmieren zu können, kann eine Programmierschnittstelle 129 vorgesehen sein. An diese Programmierschnittstelle 129 kann beispielsweise ein Rechner angeschlossen werden, über den zum Beispiel kryptografische Schlüssel in den sicheren Speicher 125 geschrieben werden können. Über die Programmierschnittstelle 129 kann das Sicherheitsgerät 120 auch an sich ändernde Sicherheitsprotokolle angepasst werden. Die entsprechenden Sicherheitsfunktionen können ebenfalls in dem sicheren Speicher 125 oder einem separaten Speicher (nicht dargestellt) hinterlegt werden, Der Mikrokontroller 126 kann auf die im sicheren Speicher 125 hinterlegten kryptografischen Schlüssel und Programme zugreifen, um die entsprechenden Sicherheitsfunktionen auszuführen.

Figur 3 zeigt ein beispielhaftes Feldbussystem 5 zur Unterstützung einer sicheren Kommunikation über den Feldbus 60.

Das Feldbussystem 5 weist den Feldbus 60 sowie wenigstens einen ersten Feldbusteilnehmer 80 auf, der eine Netzwerk-schnittstelle 81, die zum Anschalten des Feldbusteilnehmers 80 an den Feldbus 60 ausgebildet ist, aufweist. Der wenigstens eine erste Feldbusteilnehmer 80, der beispielsweise ein Sensor sein kann, ist nicht zu einer sicheren Kommunikation über den Feldbus 60 ausgebildet. Mit anderen Worten: Der Feldbusteilnehmer 80 enthält überhaupt keine Sicherheitsfunktionalität zur Sicherung einer Kommunikation und somit auch keine Sicherheitsfunktionalität zur Sicherung einer Kommunikation über den Feldbus 60.

Der wenigstens eine erste Feldbusteilnehmer 80 ist über die Netzwerkschnittstelle 81 mit einem Sicherheitsgerät 120' verbunden. Das Sicherheitsgerät 120' ist für eine sichere Kommunikation gemäß einem vorbestimmten Sicherheitsprotokoll ausgebildet. Mit anderen Worten ist im Sicherheitsgerät 120' eine Sicherheitsfunktionalität implementiert, die beispielsweise eine Authentifizierung, einen Integritätsschutz, eine Datenverschlüsselung- und Datenentschlüsselung durchführen kann, um die Kommunikation zum und vom Feldbusteilnehmer 80 insbesondere gegen externe Angriffe zu sichern.

Bei dem Sicherheitsgerät 120' kann es sich um ein Sicherheitsgerät handelt, welches im Aufbau und in der Funktionsweise im Wesentlichen identisch zu dem in Figur 2 gezeigten Sicherheitsgerät 120 ist. Somit weist das Sicherheitsgerät 120' eine Sende-/Empfangseinheit und eine Netzwerkschnittstelle 122' zum Anbinden an den Feldbus 60 und eine Anschlussschnittstelle 121' zum mechanischen und elektrischen Verbinden mit dem Feldbusteilnehmer 80 auf. Optional kann das Sicherheitsgerät 120' über eine Steuereinrichtung, eine Überwachungseinrichtung, eine sichere Speichereinrichtung sowie über eine Programmierschnittstelle verfügen. Das Sicherheitsgerät 120' kann in einem Gehäuse 130' untergebracht sein, an dem zwei Flansche 127' und 128' angeordnet sein können. Die Flansche 127' und 128 weisen jeweils eine Öffnung auf, durch die jeweils eine Schraube 111 bzw. 110 oder jeweils ein Niet zur mechanischen Kopplung mit dem Feldbusteilnehmer 80 hindurchgeführt werden kann. Im Feldbusteilnehmer 80 können entsprechende Ausnehmungen zur Aufnahme der Schrauben vorgesehen sein. Ein Netzwerkkabel 92 ist zur Anbindung des Sicherheitsgeräts 120' an den Feldbus 60 mit der Netzwerkschnittstelle 122' des Sicherheitsgeräts 120' verbunden.

An dem Feldbus 60 kann ein weiterer zum Beispiel als Aktor ausgebildeter Feldbusteilnehmer 70 über ein Netzwerkkabel 91 angeschlossen sein. Der Feldbusteilnehmer 70 ist im Unterschied zum Feldbusteilnehmer 80 für eine sichere Kommunikation über den Feldbus 60 ausgebildet. Mit anderen Worten: In dem Feldbusteilnehmer 70 sind die Sicherheitsfunktionen des vorbestimmten Sicherheitsprotokolls bereits implementiert.

An dem Feldbus 60 ist beispielsweise auch das in Figur 1 gezeigte Steuerungsgerät 30 über das in Figur 2 gezeigte Sicherheitsgerät 120 angeschlossen. Das Sicherheitsgerät 120 ist beispielsweise über Schrauben 1 00 und 101, die durch die Öffnungen in den Flansche 127 und 128 des Gehäuses 130 hindurchgeführt sind, mit dem Steuerungsgerät 30 nicht lösbar verbunden. Wie weiter in Figur 3 gezeigt, ist auch das Sicherheitsgerät 120 über ein Netzwerkkabel 90 an den Feldbus 60 angeschlossen. Das Netzwerkkabel 90 ist hierzu mit der Netzwerkschnittstelle 122 des Sicherheitsgeräts 120 verbunden.

Gemäß einer vorteilhaften Weiterbildung kann das Sicherheitsgerät 120 und das Sicherheitsgerät 122' auch über eine Nietverbindung mit dem Steuerungsgerät 30 beziehungsweise mit dem Sensor 80 nicht lösbar verbunden werden. Eine solche mechanische Kopplung stellt sicher, dass das jeweilige Sicherheitsgerät nicht ohne Zerstörung oder Beschädigung der Netzwerkschnittstelle 122 beziehungsweise 122' vom jeweiligen Feldbusteilnehmer entfernt werden kann. Eine solche Nietverbindung stellt somit sicher, dass die Funktionsfähigkeit des Sicherheitsgeräts 120 bzw. 120' nach Entfernen irreversibel blockiert ist. Das heißt, dass Sicherheitsgerät kann nicht mehr verwendet werden.

Wie bereits erwähnt, können die Sicherheitsgeräte 120 und 120' beispielsweise mittels der bekannten Power-Over-Ethernet-Technologie über den Feldbus 60 mit Energie versorgt werden. Alternativ oder zusätzlich kann das Sicherheitsgerät 120 vom Steuerungsgerät 30 und das Sicherheitsgerät 120' vom Sensor 80 mit Energie versorgt werden. Alternativ oder zusätzlich kann jedes Sicherheitsgerät eine eigene interne Energieversorgung beispielsweise in Form einer Batterie aufweisen. Darüber hinaus kann auch die bekannten Energy Harvesting Technologien eingesetzt werden, um die Sicherheitsgerät 120 und 120' mit Energie zu versorgen.

Angemerkt sei noch, dass die Sicherheitsgeräte 20, 120 und 120' als sogenannte Hardware-Sicherheitsmodule betrachtet werden können, in denen Sicherheitsalgorithmen, Zufallszahlengeneratoren und Verschlüsselungsalgorithmen gemäß einem vorbestimmten Sicherheitsprotokoll implementiert werden können.

Mit dem beispielhaften Feldbussystem 5 ist es unter anderem möglich, vom Sensor 80 zu übertragende Daten verschlüsselt zum Steuerungsgerät 30 zu übertragen, Hierzu werden die vom Sensor 80 dem Sicherheitsgerät 120' übergebenen Daten gemäß einer Sicherheitsfunktion verschlüsselt und über den Feldbus zum Sicherheitsgerät 120 übertragen. Das Sicherheitsgerät 120 entschlüsselt die empfangenen Daten wieder und übergibt sie der Steuerungseinrichtung 30 unverschlüsselt. In ähnlicher Weise können Daten vom Aktor 70 verschlüsselt zum Sicherheitsgerät 120 übertragen und dann entschlüsselt der Steuerungseinrichtung 30 übergeben werden. In ähnlicher Weise werden von dem Steuerungsgerät 30 für den Sensor 80 bestimmte Daten zunächst von dem Sicherheitsgerät 120 verschlüsselt über den Feldbus 60 zum Sicherheitsgerät 120' übertragen. Die empfangenen Daten werden dann vom Sicherheitsgerät 120' entschlüsselt und dem Sensor 80 übergeben. Weiterhin können die Sicherheitsgeräte 120 und 120' sowie der Aktor 70 dazu ausgebildet sein, eine gegenseitige Authentifizierung gemäß dem vorbestimmten Sicherheitsprotokoll durchzuführen.

Dank der Sicherheitsgeräte 120 und 120' ist es nunmehr möglich, über den Feldbus 60 eine sichere, beispielsweise gegen externe Angriffe geschützte Kommunikation zwischen den Feldbusteilnehmern 70 und 80 sowie dem Steuerungsgerät 30 zu ermöglichen, auch wenn das Steuerungsgerät 30 und der Feldbusteilnehmer 80 selbst über keine kommunikationssicherheitstechnisehen Maßnahmen verfügen.

Denkbar ist, dass ein ordnungsgemäßer Betrieb des Sicherheitsgeräts 120 lediglich reversibel blockiert wird, wenn das Sicherheitsgerät 20 zusammen mit dem Steuerungsgerät 30 vom Feldbus 60 getrennt wird, ohne dass das Steuerungsgerät 30 vom Sicherheitsgerät 120 entfernt wird. In diesem Fall kann der ordnungsgemäße Betrieb des Sicherheitsgeräts 120 durch einen gezielten Eingriff einer Bedienperson wieder aktiviert werden kann, so dass das Steuerungsgerät 30 mit dem angekoppelten Sicherheitsgerät 120 wieder an den Feldbus 60 angeschlossen und betrieben werden kann.

Für den Fall, dass in den Sicherheitsgeräten 120 und 120' noch keine Sicherheitsfunktionen eines vorbestimmten Sicherheitsprotokolls gespeichert oder frei geschaltet worden sind, ist die Sende- und Empfangseinrichtung 123 des Sicherheitsgeräts 120 bzw. des Sicherheitsgeräts 120' dazu ausgebildet, Daten von dem Steuerungsgerät 30 bzw. Daten von dem Sensor 80 transparent zum Feldbus 60 durchzuleiten, um eine herkömmlich, d.h. nicht sichere Kommunikation zwischen dem Steuerungsgerät 30 und dem Sensor 80 zu ermöglichen. Dies kann sinnvoll sein, wenn ein bestehendes, nicht sicheres Feldbussystem auf ein sicheres Feldbussystem umgestellt werden soll. Hierzu werden an den Feldbusteilnehmern 30 und 80, die nicht zu einer sicheren Kommunikation ausgebildet sind, die Sicherheitsgeräte 120 bzw. 120' angekoppelt und an den Feldbus 60 angeschlossen. Zunächst arbeiten die Sicherheitsgeräte im transparenten Betreib. Zu einem späteren Zeitpunkt werden dann in den Sicherheitsgeräten 120 und 120' die entsprechenden Sicherheitsfunktionen gemäß dem Sicherheitsprotokoll freigeschaltet.

Vorteilhafterweise wird der Feldbusteilnehmer 30 und das mit ihm gekoppelte Sicherheitsgerät 120 im Feldbussystem 5 als ein einziger Feldbusteilnehmer verwaltet, indem beispielsweise dem Feldbusteilnehmer 30 und dem mit ihm gekoppelten Sicherheitsgerät 120 eine gemeinsame Adresse zugeordnet ist. In ähnlicher Weise kann auch dem Feldbusteilnehmer 80 und dem damit gekoppelten Sicherheitsgerät 120' eine gemeinsame Adresse zugeordnet sein. Auf diese Weise kann das beispielhafte Feldbussystem 5 als ein Feldbussystem mit drei Feldbusteilnehmern betrachtet werden.

## Patentansprüche

1. Sicherheitsgerät (20; 120) zur Unterstützung einer sicheren Kommunikation über einen Feldbus (60) aufweisend:
eine Anschlusseinrichtung (10; 121) zum direkten Koppeln des Sicherheitsgeräts (20, 120) mit einer zum Anbinden an einen Feldbus (60) ausgebildeten Netzwerkschnittstelle (31; 81) eines Feldbusteilnehmers (30; 80), der nicht zur sicheren Kommunikation über den Feldbus (60) ausgebildet ist,
eine Netzwerkschnittstelle (50; 122) zum Anbinden des Sicherheitsgeräts (20, 120) an den Feldbus (60),
eine Sende- und Empfangseinrichtung (24; 123), die dazu ausgebildet ist, von dem direkt angekoppelten Feldbusteilnehmer (30), der nicht zu einer sicheren Kommunikation ausgebildet ist, kommende Daten gemäß einem vorbestimmten Sicherheitsprotokoll sicher über den Feldbus (60) zu übertragen, und die ferner dazu ausgebildet ist, gemäß dem vorbestimmten Sicherheitsprotokoll über den Feldbus (60) übertragene und für den Feldbusteilnehmer (30) bestimmte Daten zu empfangen und dem Feldbusteilnehmer zu übergeben,
**dadurch gekennzeichnet, dass** im gekoppelten Zustand eine Verbindung zwischen dem Sicherheitsgerät (20; 120) und dem Feldbusteilnehmer (30) derart besteht, dass bei einer Trennung oder Beschädigung der Kopplung der ordnungsgemäße Betrieb des Sicherheitsgeräts (20; 120) reversibel oder irreversibel blockiert ist, und
das Sicherheitsgerät (20; 120) ferner eine Steuereinrichtung (22; 126) und eine Überwachungseinrichtung (21; 124) aufweist, die zum Überwachen der Verbindung zwischen dem Sicherheitsgerät (20; 120) und einem angeschlossenen Feldbusteilnehmer (30) ausgebildet ist, wobei die Steuereinrichtung (22; 126) dazu ausgebildet ist, unter Ansprechen auf ein Fehlersignal der Überwachungseinrichtung (21; 124) den ordnungsgemäßen Betrieb des Sicherheitsgeräts zu blockieren.

2. Sicherheitsgerät nach Anspruch 1,
**dadurch gekennzeichnet, dass**
die Sende- und Empfangseinrichtung (24; 127) zum Entschlüsseln von über den Feldbus empfangenen verschlüsselten Daten und zum Verschlüsseln von Daten, die von einem angeschlossenen Feldbusteilnehmer (30), der nicht zur sicheren Kommunikation über den Feldbus ausgebildet ist, übertragen werden sollen, ausgebildet ist.

3. Sicherheitsgerät nach einem der vorstehenden Ansprüche,
**dadurch gekennzeichnet, dass**
das Sicherheitsgerät (20; 120) zur Durchführung eines Authentifizierungsverfahrens und/oder wenigstens eines kryptografischen Algorithmus gemäß dem vorbestimmten Sicherheitsprotokoll ausgebildet ist.

4. Sicherheitsgerät nach einem der vorstehenden Ansprüche,
**gekennzeichnet durch**
eine sichere Speichereinrichtung (23; 125) zum Ablegen kryptografischer Schlüssel.

5. Sicherheitsgerät nach Anspruch 4,
**dadurch gekennzeichnet, dass**
die Steuereinrichtung (22; 126) dazu ausgebildet ist, unter Ansprechen auf ein Fehlersignal der Überwachungseinrichtung (21; 124) wenigstens einen der kryptografischen Schlüssel zu löschen und/oder die Anschlusseinrichtung (10; 121) und/oder die Netzwerkschnittstelle (50; 122) des Sicherheitsgeräts (20; 120) irreversibel oder reversibel zu blockieren.

6. Sicherheitsgerät nach einem der vorstehenden Ansprüche,
**dadurch gekennzeichnet, dass**
die Energieversorgung des Sicherheitsgeräts (20; 120) über den Feldbus (60) und/oder mittels einer internen Energieversorgungsquelle und/oder über einen angeschlossenen Feldbusteilnehmer (30) und/oder mittels Energy Harvesting erfolgt.

7. Sicherheitsgerät nach einem der vorstehenden Ansprüche,
**dadurch gekennzeichnet, dass**
die Sende- und Empfangseinrichtung (24; 127) dazu ausgebildet ist, Daten von einem angeschlossenen Feldbusteilnehmer (30), der nicht zur sicheren Kommunikation über den Feldbus ausgebildet ist, transparent zum Feldbus durchzuleiten.

8. Sicherheitsgerät nach einem der vorstehenden Ansprüche,
**dadurch gekennzeichnet, dass**
als Feldbusteilnehmer (30) ein Feldgerät oder ein Steuerungsgerät mit dem Sicherheitsgerät verbindbar ist.

9. Sicherheitsgerät nach einem der vorstehenden Ansprüche
**dadurch gekennzeichnet, dass**
das vorbestimmte Sicherheitsprotokoll mehrere definierte Sicherheitsfunktionen enthält, die in einem Feldbusprotokoll integriert sind.

10. Feldbussystem (5) zur Unterstützung einer sicheren Kommunikation über einen Feldbus umfassend:
einen Feldbus (60),
wenigstens einen ersten Feldbusteilnehmer (30, 80), der eine Netzwerkschnittstelle (31; 81), die zum Anschalten an den Feldbus (60) ausgebildet ist, aufweist, wobei der wenigstens eine erste Feldbusteilnehmer (30; 80) nicht zu einer sicheren Kommunikation über den Feldbus ausgebildet ist,
wobei der wenigstens eine erste Feldbusteilnehmer (30; 80) mit einem Sicherheitsgerät (120; 120') nach einem der vorstehenden Ansprüche verbunden ist, wobei das Sicherheitsgerät (120; 120') für eine sichere Kommunikation gemäß einem vorbestimmten Sicherheitsprotokoll ausgebildet ist.

11. Feldbussystem nach Anspruch 10,
**gekennzeichnet durch**
wenigstens einen zweiten an den Feldbus (60) angeschlossenen Feldbusteilnehmer (70), der für eine sichere Kommunikation gemäß dem vorbestimmten Sicherheitsprotokoll mit dem Sicherheitsgerät (120; 120'), an dem der wenigstens eine erste Feldbusteilnehmers (30; 80) angekoppelt ist, ausgebildet ist.

12. Feldbussystem nach Anspruch 10oder 11,
**dadurch gekennzeichnet, dass**
zwischen dem wenigstens einen ersten Feldbusteilnehmer (30; 80) und dem Sicherheitsgerät (120; 120') eine nicht lösbare Verbindung besteht.

13. Feldbussystem nach einem der Ansprüche 10 bis 12,
**dadurch gekennzeichnet, dass**
der wenigstens eine erste Feldbusteilnehmer (30) als Feldgerät oder Steuerungsgerät und der wenigstens eine zweite Feldbusteilnehmer (80) als Feldgerät oder Steuerungsgerät ausgebildet sein kann.

14. Steckverbinder (10), insbesondere ein RJ45 Stecker,
**dadurch gekennzeichnet, dass**
in dem Steckverbinder (10) ein Sicherheitsgerät (20) gemäß einem der Ansprüche 1 bis 9 integriert ist.

## Claims

1. A security device (20; 120) for supporting secure communication via a field bus (60), comprising:
a connection means (10; 121) for directly coupling the security device (20, 120) to a network interface (31; 81) of a fieldbus subscriber (30; 80) the network interface (31; 81) being adapted to be connected to a fieldbus (60); and the field bus subscriber (30; 80) being not adapted for secure communication via the fieldbus (60),
a network interface (50; 122) for connecting the security device (20, 120) to the field bus (60);
a transmitting and receiving device (24; 123) configured to securely transfer data coming from the directly coupled fieldbus subscriber (30) that is not adapted for secure communication, via the fieldbus (60) in accordance with a predetermined security protocol, and furthermore configured to receive data transferred via the fieldbus (60) in accordance with the predetermined security protocol and intended for the fieldbus subscriber (30) and to deliver them to the fieldbus subscriber;
**characterized in that**, in the coupled state, a link is established between the security device (20; 120) and the field bus subscriber (30) such that if the coupling is disconnected or damaged, proper operation of the security device (20; 120) is blocked reversibly or irreversibly; and that
the security device (20; 120) further comprises a control device (22; 126) and a monitoring device (21; 124) configured for monitoring the link between the security device (20; 120) and a connected field bus subscriber (30), wherein the control device (22; 126) is configured to block proper operation of the security device in response to an error signal from the monitoring device (21; 124).

2. The security device according to claim 1, **characterized in that** the transmitting and receiving device (24; 127) is adapted for decrypting encrypted data received via the fieldbus and for encrypting data that are to be transferred from a connected field bus subscriber (30) that is not adapted for secure communication via the field bus.

3. The security device according to any one of the preceding claims, **characterized in that** the security device (20; 120) is configured for performing an authentication method and/or at least one cryptographic algorithm in accordance with the predetermined security protocol.

4. The security device according to any one of the preceding claims, **characterized by** a secure storage device (23; 125) for storing cryptographic keys.

5. The security device according to claim 4, **characterized in that** the control device (22; 126) is configured, in response to an error signal from the monitoring device (21; 124), to delete at least one of the cryptographic keys and/or to irreversibly or reversibly block the connection means (10; 121) and/or the network interface (50; 122) of the security device (20; 120).

6. The security device according to any one of the preceding claims, **characterized in that** the power supply of the security device (20; 120) is provided via the field bus (60) and/or by an internal power supply source and/or via a connected field bus subscriber (30) and/or by energy harvesting.

7. The security device according to any one of the preceding claims, **characterized in that** the transmitting and receiving device (24; 127) is configured to transparently pass data to the field bus from a connected field bus subscriber (30) that is not adapted for secure communication via the field bus.

8. The security device according to any one of the preceding claims, **characterized in that** the field bus subscriber (30) that can be connected to the security device can be in the form of a field device or a control device.

9. The security device according to any one of the preceding claims, **characterized in that** the predetermined security protocol includes a plurality of defined security functions that are integrated in a fieldbus protocol.

10. A field bus system (5) for supporting secure communication via a field bus, comprising:
a field bus (60);
at least one first field bus subscriber (30, 80) which has a network interface (31; 81) that is adapted to be connected to the field bus (60), wherein the at least one first field bus subscriber (30; 80) is not adapted for secure communication via the fieldbus;
wherein the at least one first field bus subscriber (30; 80) is connected to a security device (120; 120') according to any one of the preceding claims, wherein the security device (120; 120') is adapted for secure communication in accordance with a predetermined security protocol.

11. The field bus system according to claim 10, **characterized by**
at least one second fieldbus subscriber (70) connected to the fieldbus (60), which is adapted for secure communication in accordance with the predetermined security protocol with the security device (120; 120') to which the at least one first fieldbus subscriber (30; 80) is coupled.

12. The field bus system according to claim 10 or 11, **characterized in that**
a non-detachable connection is established between the at least one first field bus subscriber (30; 80) and the security device (120; 120').

13. The field bus system according to any one of claims 10 to 12, **characterized in that**
the at least one first field bus subscriber (30) can be in the form of a field device or a control device; and that the at least one second field bus subscriber (80) can be in the form of a field device or a control device.

14. A connector (10), in particular an RJ45 plug, **characterized in that**
the connector (10) includes a security device (20) according to any one of claims 1 to 9 integrated therein.

## Revendications

1. Appareil de sécurité (20 ; 120) pour le support d'une communication sécurisée par l'intermédiaire d'un bus de terrain (60) comprenant :
un dispositif de raccordement (10 ; 121) pour le couplage direct de l'appareil de sécurité (20, 120) avec une interface réseau (31 ; 81), conçue pour la liaison à un bus de terrain (60), d'un participant du bus (30 ; 80), qui n'est pas conçu pour une communication sécurisée par l'intermédiaire du bus de terrain (60),
une interface réseau (50 ; 122) pour la liaison de l'appareil de sécurité (20, 120) au bus de terrain (60),
un dispositif émetteur-récepteur (24 ; 123) qui est conçu pour transmettre, de manière sécurisée, par l'intermédiaire du bus de terrain (60), les données provenant du participant de bus (30) couplé directement, qui n'est pas conçu pour une communication sécurisée, selon un protocole de sécurité prédéterminé et qui est en outre conçu pour recevoir les données transmises selon le protocole de sécurité par l'intermédiaire du bus de terrain (60) et destinées au participant du bus (30) et les transmettre au participant du bus,
**caractérisé en ce que**, dans l'état couplé, une liaison existe entre l'appareil de sécurité (20 ; 120) et le participant du bus (30), de façon à ce que, lors d'une déconnexion ou d'un endommagement du couplage, le fonctionnement correct de l'appareil de sécurité (20 ; 120) soit bloqué de manière réversible ou irréversible, et l'appareil de sécurité (20 ; 120) comprend en outre un dispositif de commande (22 ; 126) et un dispositif de surveillance (21 ; 124), qui est conçu pour la surveillance de la liaison entre l'appareil de sécurité (20 ; 120) et un participant de bus (30) raccordé, où le dispositif de commande (22 ; 126) est conçu pour bloquer le fonctionnement correct de l'appareil de sécurité en réponse à un signal d'erreur du dispositif de surveillance (21 ; 124).

2. Appareil de sécurité selon la revendication 1,
**caractérisé en ce que** le dispositif émetteur-récepteur (24 ; 127) est conçu pour le déchiffrement des données chiffrées reçues par l'intermédiaire du bus de terrain et pour le chiffrement des données qui doivent être transmises par un participant du bus (30) raccordé, qui n'est pas conçu pour une communication sécurisée par l'intermédiaire du bus de terrain.

3. Appareil de sécurité selon l'une des revendications précédentes,
l'appareil de sécurité (20 ; 120) étant **caractérisé en ce qu'**il est conçu pour l'exécution d'un procédé d'authentification et/ou d'au moins un algorithme cryptographique selon le protocole de sécurité prédéterminé.

4. Appareil de sécurité selon l'une des revendications précédentes,
**caractérisé par** un dispositif de mémoire sécurisé (23 ; 125) pour l'enregistrement d'une clé cryptographique.

5. Appareil de sécurité selon la revendication 4,
**caractérisé en ce que** le dispositif de commande (22 ; 126) est conçu pour effacer, en réponse à un signal d'erreur du dispositif de surveillance (21 ; 124), au moins une des clés cryptographiques et/ou pour bloquer de manière irréversible ou réversible le dispositif de raccordement (10 ; 121) et/ou l'interface réseau (50 ; 122) de l'appareil de sécurité (20 ; 120).

6. Appareil de sécurité selon l'une des revendications précédentes,
**caractérisé en ce que** l'alimentation en énergie de l'appareil de sécurité (20 ; 120) a lieu par l'intermédiaire du bus de terrain (60) et/ou au moyen d'une source d'alimentation en énergie interne et/ou par l'intermédiaire d'un participant de bus (30) raccordé et/ou au moyen d'un captage d'énergie.

7. Appareil de sécurité selon l'une des revendications précédentes,
**caractérisé en ce que** le dispositif émetteur-récepteur (24 ; 127) est conçu pour conduire les données d'un participant de bus (30) raccordé, qui n'est pas conçu pour une communication sécurisée par l'intermédiaire du bus de terrain, de manière transparente vers le bus de terrain.

8. Appareil de sécurité selon l'une des revendications précédentes,
**caractérisé en ce que**, en tant que participant de bus (30), un appareil de terrain ou un appareil de commande peut être relié avec l'appareil de sécurité.

9. Appareil de sécurité selon l'une des revendications précédentes,
**caractérisé en ce que** le protocole de sécurité prédéterminé contient plusieurs fonctions de sécurité définies, qui sont intégrées dans un protocole de bus de terrain.

10. Système de bus de terrain (5) pour le support d'une communication sécurisée par l'intermédiaire d'un bus de terrain, comprenant :
un bus de terrain (60),
au moins un premier participant de bus (30, 80) qui comprend une interface réseau (31 ; 81) qui est conçue pour être branchée au bus de terrain (60), où l'au moins un premier participant de bus (30 ; 80) n'est pas conçu pour une communication sécurisée par l'intermédiaire du bus de terrain,
dans lequel l'au moins un premier participant de bus (30 ; 80) est relié avec un appareil de sécurité (120 ; 120') selon l'une des revendications précédentes, où l'appareil de sécurité (120 ; 120') est conçu pour une communication sécurisée selon un protocole de sécurité prédéterminé.

11. Système de bus de terrain selon la revendication 10,
**caractérisé par** au moins un deuxième participant de bus (70) raccordé au bus de terrain (60), qui est conçu pour une communication sécurisée selon le protocole de sécurité prédéterminé avec l'appareil de sécurité (120 ; 120') auquel l'au moins un premier participant de bus (30 ; 80) est couplé.

12. Système de bus de terrain selon la revendication 10 ou 11,
**caractérisé en ce que**, entre l'au moins un premier participant de bus (30 ; 80) et l'appareil de sécurité (120 ; 120'), il existe une liaison non amovible.

13. Système de bus de terrain selon l'une des revendications 10 à 12,
**caractérisé en ce que** l'au moins un premier participant de bus (30) peut être conçu comme un appareil de terrain ou un appareil de commande et l'au moins un deuxième participant de bus (80) peut être conçu comme un appareil de terrain ou un appareil de commande.

14. Connecteur (10), plus particulièrement connecteur RJ45,
**caractérisé en ce que** dans le connecteur (10) est intégré un appareil de sécurité (20) selon l'une des revendications 1 à 9.
